# EUROPEAN PATENT APPLICATION

(11) **EP 3 424 701 A1**
(43) Date of publication of application: **09.01.2019**
(21) Application number: 17759995.8
(22) Date of filing: 28.02.2017
(51) Int. Cl.: B32B 5/28, C08J 5/04

(54) **FIBER-REINFORCED RESIN MATERIAL LAMINATE AND MANUFACTURING METHOD FOR SAME**

(30) Priority: 29.02.2016 JP 2016037057
(71) Applicant: Mitsubishi Chemical Corporation, Tokyo 100-8251 (JP)
(72) Inventor: ISHIKAWA Ryuichi, Tokyo 100-8251 (JP); MURANO Yasunori, Tokyo 100-8251 (JP); KAMATA Masatoshi, Tokyo 100-8251 (JP); YAMAMOTO Nobuyuki, Tokyo 100-8251 (JP); SAMEJIMA Tadao, Tokyo 100-8251 (JP)
(74) Representative: Ter Meer Steinmeister & Partner
(86) International application number: PCT/JP2017/007773
(87) International publication number: WO 2017/150529

(57) **Abstract**

A fiber-reinforced resin material laminate 1 is provided with the following: a fiber-reinforced resin material 2 in which a fiber bundle group formed of a plurality of fiber bundles is impregnated with a matrix resin composition; and a first carrier sheet 3 and a second carrier sheet 4 which form a pair and sandwich the fiber-reinforced resin material 2 therebetween, with a mark 5 being provided on a surface 4a of the second carrier sheet 4. In a manufacturing method for the fiber-reinforced resin material laminate 1, during an impregnation step, the fiber-reinforced resin material 2 is formed in a state of being sandwiched between the first carrier sheet 3 and the second carrier sheet 4, and thereafter, the mark 5 is provided by marking the surface 4a of the second carrier sheet 4.

## Description

### TECHNICAL FIELD

The present invention relates to a fiber-reinforced resin material laminate and a manufacturing method for the same.

This application is based upon and claims the benefit of priority of the prior Japanese Patent Application No. 2016-037057 filed in Japan on February 29, 2016, the entire contents of which are incorporated herein by reference.

### BACKGROUND ART

A sheet molding compound (SMC) exhibiting a property of easily flowing at the time of molding using a mold is widely used as a part having partially different wall thicknesses and an intermediate material of a fiber-reinforced resin material molded body having ribs, bosses, and the like. SMC is a fiber-reinforced resin material obtained, for example, by impregnating a sheet-shaped fiber bundle group formed of a plurality of chopped fiber bundles obtained by cutting a long reinforcing fiber such as a glass fiber or a carbon fiber into a predetermined length with a thermosetting resin such as an unsaturated polyester resin. For example, a fiber-reinforced resin material molded body is obtained by appropriately cutting the fiber-reinforced resin material and then molding the cut fiber-reinforced resin material into a desired shape by using a mold.

As a method for manufacturing the fiber-reinforced resin material, for example, the following method is known. A long fiber-reinforced resin material is obtained by pressurizing a long material precursor in which a sheet-shaped fiber bundle group is sandwiched between a pair of resin sheets formed of a matrix resin composition from both sides and thus impregnating the sheet-shaped fiber bundle group with the matrix resin composition (for example, Patent Literature 1).

### CITATION LIST

### PATENT LITERATURE

Patent Literature 1: JP 01-249409 A

### SUMMARY OF THE INVENTION

### PROBLEM TO BE SOLVED BY THE INVENTION

However, it is difficult to handle the long fiber-reinforced resin material obtained by a conventional method as disclosed in Patent Literature 1 in various steps before molding, for example, it is difficult to put the long fiber-reinforced resin material at the right position at the time of cutting before molding.

An object of the present invention is to provide a fiber-reinforced resin material laminate which makes it possible to easily carry out steps before molding such as cutting of a fiber-reinforced resin material and a manufacturing method for the same.

### MEANS FOR SOLVING PROBLEM

The present invention provides a fiber-reinforced resin material laminate and a manufacturing method for the same which have the following configurations.
[1] A fiber-reinforced resin material laminate including a fiber-reinforced resin material obtained by impregnating a fiber bundle group formed of a plurality of fiber bundles with a matrix resin composition and a pair of carrier sheets sandwiching the fiber-reinforced resin material, in which the carrier sheet is provided with a mark portion.
[2] The fiber-reinforced resin material laminate according to [1], in which the mark portion includes a tape with pressure sensitive adhesive, a cured film formed of a UV curable resin ink, or concave and convex.
[3] The fiber-reinforced resin material laminate according to [2], in which the pressure sensitive adhesive of the tape with pressure sensitive adhesive is a silicone-based pressure sensitive adhesive.
[4] The fiber-reinforced resin material laminate according to [2], in which the concave and convex are formed by at least one kind of means selected from the group consisting of a blasting means for projecting fine sand onto a surface of the carrier sheet and a hairline means for bringing a roll having a surface provided with a concavoconvex shape into contact with a surface of the carrier sheet.
[5] The fiber-reinforced resin material laminate according to any one of [1] to [4], in which the long fiber-reinforced resin material is sandwiched between the pair of long carrier sheets and the mark portion is provided at an end portion in a length direction of the carrier sheet.
[6] The fiber-reinforced resin material laminate according to any one of [1] to [4], in which the long fiber-reinforced resin material is sandwiched between the pair of long carrier sheets and the mark portion is provided from one end to the other end in a length direction of the carrier sheet.
[7] A method for manufacturing the fiber-reinforced resin material laminate according to any one of [1] to [6], the method including an impregnation step of forming a fiber-reinforced resin material by pressurizing a laminate precursor disposed between the pair of carrier sheets from both sides using a material precursor having the fiber bundle group sandwiched between a pair of resin sheets formed of the matrix resin composition and thus impregnating the fiber bundle group with the matrix resin composition and a marking step of providing the mark portion on a surface of at least one of the pair of carrier sheets by marking.
[8] The method for manufacturing the fiber-reinforced resin material laminate according to [7], in which the marking step is carried out after the impregnation step.
[9] The method for manufacturing the fiber-reinforced resin material laminate according to [7], in which the marking step is carried out before the impregnation step.

### EFFECT OF THE INVENTION

By using the fiber-reinforced resin material laminate of the present invention, it is possible to easily carry out steps before molding such as cutting of a fiber-reinforced resin material.

According to the method for manufacturing a fiber-reinforced resin material laminate of the present invention, a fiber-reinforced resin material laminate which makes it possible to easily carry out steps before molding such as cutting of a fiber-reinforced resin material is obtained.

### BRIEF DESCRIPTION OF DRAWINGS

Fig. 1 is a plan view which illustrates an example of a fiber-reinforced resin material laminate of the present invention;
Fig. 2 is a sectional view taken along the line A-A of the fiber-reinforced resin material laminate illustrated in Fig 1;
Fig. 3 is a schematic configuration view which illustrates an example of a manufacturing apparatus to be used in a method for manufacturing a fiber-reinforced resin material laminate of the present invention; and
Fig. 4 is a schematic configuration view which illustrates another example of a manufacturing apparatus to be used in a method for manufacturing a fiber-reinforced resin material laminate of the present invention.

### MODE(S) FOR CARRYING OUT THE INVENTION

### [Fiber-Reinforced Resin Material Laminate]

Hereinafter, an example of the fiber-reinforced resin material laminate of the present invention will be described.

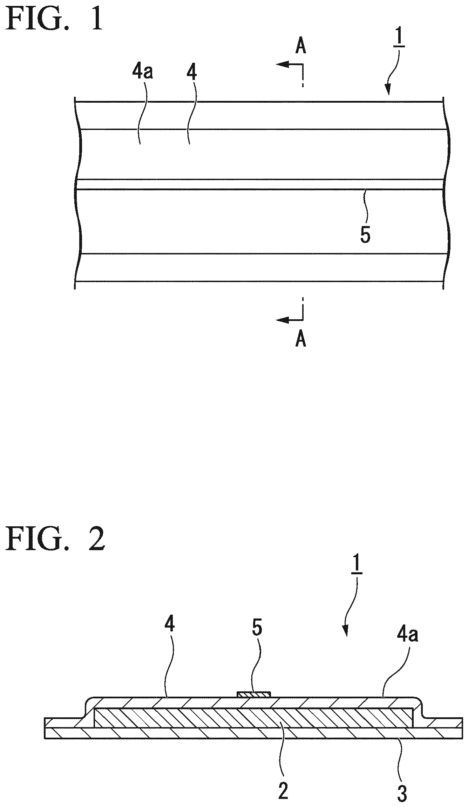

A fiber-reinforced resin material laminate 1 (hereinafter also simply referred to as the "laminate 1") of the present embodiment includes a long fiber-reinforced resin material 2 and a pair of long first carrier sheet 3 and a long second carrier sheet 4 which sandwich the fiber-reinforced resin material 2 as illustrated in Figs. 1 and 2. In the laminate 1 of this example, the first carrier sheet 3 is disposed on the lower side of the fiber-reinforced resin material 2 and the second carrier sheet 4 is disposed on the upper side of the fiber-reinforced resin material 2. The widths of the first carrier sheet 3 and the second carrier sheet 4 are wider than the width of the fiber-reinforced resin material 2. The side edge portions of the first carrier sheet 3 and the second carrier sheet 4 are in close contact with each other on both sides in the width direction of the fiber-reinforced resin material 2. A mark portion 5 is provided on an outer surface 4a of the second carrier sheet 4.

### (Fiber-Reinforced Resin Material)

The fiber-reinforced resin material 2 is formed by impregnating a sheet-shaped fiber bundle group in which a plurality of fiber bundles are scattered in a sheet shape with a matrix resin composition.

The reinforcing fiber which forms the fiber bundle is not particularly limited, and for example, an inorganic fiber, an organic fiber, a metal fiber, or a reinforcing fiber having a hybrid configuration in which these are combined can be used.

Examples of the inorganic fiber may include a carbon fiber, a graphite fiber, a silicon carbide fiber, an alumina fiber, a tungsten carbide fiber, a boron fiber, and a glass fiber. Examples of the organic fiber may include an aramid fiber, a high density polyethylene fiber, other general nylon fibers, and a polyester fiber. Examples of the metal fiber may include fibers of stainless steel and iron, and a carbon fiber coated with a metal may also be used. Among these, a carbon fiber is preferable when mechanical properties such as strength of the fiber-reinforced resin material molded body are taken into consideration.

The reinforcing fiber may be used singly or two or more kinds thereof may be used concurrently.

The fiber length of the reinforcing fiber is preferably from 5 to 100 mm, more preferably from 10 to 75 mm, and still more preferably from 20 to 60 mm. It is likely to obtain a fiber-reinforced resin material molded body which exhibits excellent physical properties such as tensile strength and modulus of elasticity when the fiber length of the reinforcing fiber is the lower limit value or longer. The fiber-reinforced resin material is more likely to flow at the time of molding and thus molding is facilitated when the fiber length of the reinforcing fiber is the upper limit value or shorter.

The average thickness of the fiber bundles is preferably from 0.01 to 0.5 mm, more preferably from 0.02 to 0.09 mm, and still more preferably from 0.025 to 0.07 mm. It is easy to impregnate the fiber bundle group with the matrix resin composition when the average thickness of the fiber bundles is the lower limit value or thicker. It is likely to obtain a fiber-reinforced resin material molded body which exhibits excellent physical properties such as tensile strength and modulus of elasticity when the average thickness of the fiber bundles is the upper limit value or thinner.

Incidentally, the average thickness of the fiber bundles is measured by the following method. The fiber-reinforced resin material is heated in an electric furnace or the like to decompose the matrix resin composition and 10 fiber bundles are randomly selected from the residual fiber bundles. For each of the 10 fiber bundles, the thickness at three points of both end portions in the fiber axial direction and the center portion is measured by using a caliper, all of these measured values are averaged, and the value thus determined is taken as the average thickness.

The average width of the fiber bundles is preferably from 1 to 50 mm, more preferably from 1.5 to 15 mm, and still more preferably from 2 to 8 mm. The fiber-reinforced resin material is more likely to flow at the time of molding and thus molding is facilitated when the average width of the fiber bundles is the lower limit value or wider. It is easy to obtain a fiber-reinforced resin material molded body which exhibits excellent physical properties such as tensile strength and modulus of elasticity when the average width of the fiber bundles is the upper limit value or narrower.

Incidentally, the average width of the fiber bundles is measured by the following method. For each of the 10 fiber bundles obtained in the same manner as in the measurement of the average thickness, the width at three points of both end portions and center portion in the fiber axis direction is measured by using a caliper, all of these measured values are averaged, and the value thus determined is taken as the average width.

### (Matrix Resin Composition)

As the matrix resin composition, a composition containing a thermosetting resin is preferable.

The thermosetting resin is not particularly limited, and examples thereof may include an epoxy resin, a phenol resin, an unsaturated polyester resin, a urethane resin, a urea resin, a melamine resin, and an imide resin. Among these, an acrylate resin having an epoxy group (epoxy acrylate resin) is preferable. The thermosetting resin may be used singly or two or more kinds thereof may be used concurrently.

Additives such as a curing agent, an internal release agent, a thickening agent, and a stabilizer may be blended into the matrix resin composition if necessary.

### (Carrier Sheet)

The pair of the first carrier sheet 3 and the second carrier sheet 4 are sheets which sandwich the fiber-reinforced resin material 2. At the time of molding, the first carrier sheet 3 and the second carrier sheet 4 are peeled off from the fiber-reinforced resin material 2.

The material which forms the carrier sheet is not particularly limited as long as it can sandwich the fiber-reinforced resin material without degenerating the fiber-reinforced resin material, and examples thereof may include a film of a polyolefin such as polyethylene or polypropylene, a film of polyamide, polyvinyl alcohol, EVA, or the like, or a multilayer laminate film including these.

The pair of carrier sheets may be the same as or different from each other.

The thickness of the carrier sheet is preferably from 0.01 to 0.25 mm and more preferably from 0.04 to 0.1 mm. It is possible to suppress breakage of the carrier sheet during the manufacture of the fiber-reinforced resin material, particularly during the impregnation step when the thickness of the carrier sheet is the lower limit value or thicker. The post-processing such as cutting of the fiber-reinforced resin material laminate is facilitated when the thickness of the carrier sheet is the upper limit value or thinner.

Incidentally, the thickness can be measured by using a micrometer.

### (Mark Portion)

A mark portion 5 is provided on the outer surface 4a of the second carrier sheet 4 disposed on the upper side of the fiber-reinforced resin material 2. The mark portion 5 in this example has a band shape and is provided at the center portion in the width direction of the surface 4a of the second carrier sheet 4 in the length direction of the second carrier sheet 4.

It is possible to easily carry out steps before molding such as cutting of the fiber-reinforced resin material laminate as the mark portion is provided. Specifically, for example, by utilizing the mark portion for positioning of the laminate at the time of cutting, it is possible to perform the positioning of the laminate more accurately and efficiently, to perform the cutting without waste, to take out the material by cutting the fiber-reinforced resin material 2 at the stable weight portion, and thus to improve the yield at the time of molding. In addition, it is easy to manage and handle the fiber-reinforced resin material laminate when a lot number is provided as the mark portion.

The mode in which the mark portion is provided on the surface of the carrier sheet is not particularly limited, and a mark portion can be provided at the end portion in the length direction of the carrier sheet, for example, in a case in which a long fiber-reinforced resin material is sandwiched between a pair of long carrier sheets as in this example. The mode in which the mark portion is limitedly provided at the end portion of the carrier sheet in this manner is advantageous in terms of cost. Furthermore, inconveniences such as excessive winding and tightening due to a difference in elongation percentage are hardly caused even when there is a difference between the elongation percentage of the mark portion and the elongation percentage of the carrier sheet or fiber-reinforced resin material.

In addition, it is preferable to provide a mark portion at the terminal end portion of the laminate when storing a long laminate in a storage container or winding it onto a bobbin. In such a storage body, the terminal end portion of the laminate is usually positioned on the outermost side and thus the mark portion can be easily recognized and utilized at the time of use even when the mark portion is limitedly provided.

In addition, a belt-shaped mark portion may be provided from one end to the other end in the length direction of the carrier sheet in a case in which a long fiber-reinforced resin material is sandwiched between a pair of long carrier sheets. It is possible to utilize the mark portion even in a case in which the use of the long laminate is stopped in the middle and then restarted by providing the mark portion in this manner.

The mark portion is not particularly limited, and for example, it may be a tape with pressure sensitive adhesive, a cured film formed of a UV curable resin ink, or concave and convex. When these mark portions are provided, it is possible to prevent the mark portion from being eliminated by the volatile component even in a case in which the fiber-reinforced resin material contains a volatile component such as styrene. In addition, it is possible to suppress the occurrence of inconveniences such as degeneration of the fiber-reinforced resin material when providing the mark portion.

The tape with pressure sensitive adhesive is not particularly limited, and examples thereof may include one in which a silicone-based pressure sensitive adhesive is coated on a tape base material made of polyester. When a silicone-based pressure sensitive adhesive is used as the pressure sensitive adhesive, it is possible to prevent the tape from peeling off by the volatile component even in a case in which the fiber-reinforced resin material contains a volatile component such as styrene.

As the silicone-based pressure sensitive adhesive, it is preferable to use one containing an addition curing type polyorganosilicone. Examples of the silicone-based pressure sensitive adhesive may include those composed of a polymer having a siloxane bond in the main skeleton.

In addition, as the UV curable resin ink, for example, an ink containing organic and inorganic pigments is preferable. Examples of the method of curing the UV curable resin ink and forming a cured film may include a method in which a UV curable resin ink is coated on the surface of the carrier sheet and then irradiated with UV to form a cured film.

In addition, the concave and convex can be formed, for example, by using a blasting means for projecting fine sand onto the surface of the carrier sheet and a hairline means for bringing this roll having a surface provided with a concavoconvex shape into contact with the surface of the carrier sheet.

The concave and convex mean a portion (convex portion) protruding outward from the surface of the carrier sheet by from 5 to 100 µm or a portion (concave portion) recessed inward from the surface of the carrier sheet by from 5 to 50 µm.

Incidentally, bleeding, distortion, and the like are likely to occur at the mark portion formed of an oil based ink by a volatile component such as styrene. However, a mark portion formed of an oil based ink may be provided in a case in which the fiber-reinforced resin material does not contain a volatile component such as styrene.

In a case in which the mark portion has a belt shape, the width, thickness, and length of the mark portion are not particularly limited and can be appropriately determined depending on the application.

The shape of the mark portion is not limited to the band shape, and, for example, it may be a broken line shape, a circular shape, or a rectangular shape or it may be a character such as a numeral.

The number of the mark portions is not particularly limited and can be appropriately determined.

### (Effect)

As described above, in the fiber-reinforced resin material laminate of the present invention, a mark portion is provided on the surface of the carrier sheet. For this reason, it is possible to easily carry out various steps for handling the fiber-reinforced resin material before molding, for example, positioning is performed at the time of cutting and the like by utilizing the mark portion or the fiber-reinforced resin material laminate is managed.

Incidentally, the fiber-reinforced resin material laminate of the present invention is not limited to the laminate 1 described above. For example, the fiber-reinforced resin material laminate of the present invention may have a mark portion on both of a pair of carrier sheets. In addition, the fiber-reinforced resin material laminate is not required to be long.

In addition, a mark portion may be provided on the inner surface of the carrier sheet in a case in which the carrier sheet is transparent and the inside thereof can be visually recognized.

### [Method For Manufacturing Fiber-Reinforced Resin Material Laminate]

The method for manufacturing a fiber-reinforced resin material laminate of the present invention has the following impregnation step and marking step.

Impregnation step: a step of forming a fiber-reinforced resin material by pressurizing a laminate precursor disposed between a pair of carrier sheets from both sides using a material precursor having a fiber bundle group sandwiched between a pair of resin sheets formed of a matrix resin composition and thus impregnating the fiber bundle group with the matrix resin composition.

Marking step: a step of providing a mark portion on the surface of at least one of the pair of carrier sheets by marking.

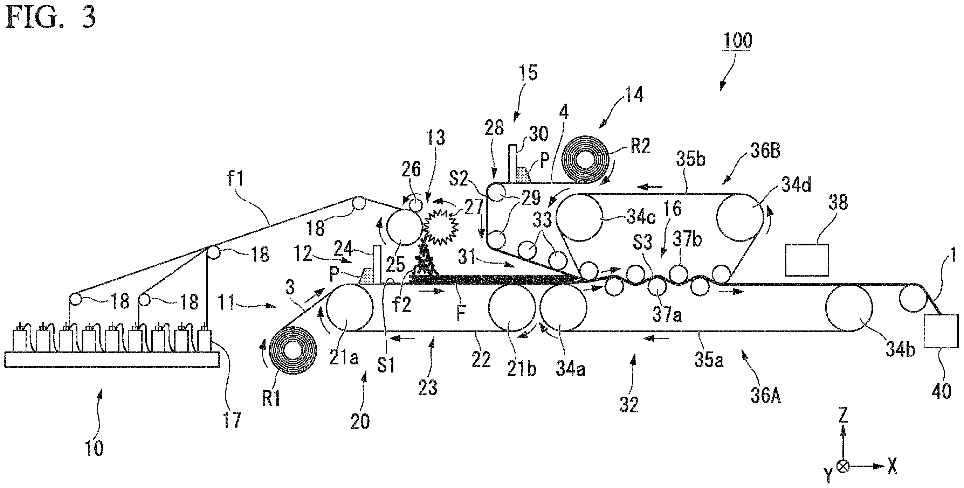

Hereinafter, as an example of the manufacturing method for a fiber-reinforced resin material laminate of the present invention, a case of using a manufacturing apparatus 100 illustrated in Fig. 3 will be described as an example. In the following description, an XYZ orthogonal coordinate system is set, and the positional relation among the respective members will be described while referring to this XYZ orthogonal coordinate system if necessary.

### (Manufacturing Apparatus)

The manufacturing apparatus 100 is equipped with a fiber bundle supply unit 10, a first carrier sheet supply unit 11, a first conveying unit 20, a first coating unit 12, a cutting machine 13, a second carrier sheet supply unit 14, a second conveying unit 28, a second coating unit 15, an impregnating unit 16, a marking unit 38, and a storage container 40.

The first carrier sheet supply unit 11 supplies the long first carrier sheet 3 withdrawn from a first original fabric roll R1 to the first conveying unit 20. The first conveying unit 20 includes a conveyor 23 in which an endless belt 22 is hung between a pair of pulleys 21a and 21b. In the conveyor 23, the endless belt 22 is orbited as the pair of pulleys 21 a and 21b are rotated in the same direction and the first carrier sheet 3 is conveyed on the surface of the endless belt 22 toward the right side in the X axis direction.

The first coating unit 12 is positioned right above the pulley 21a side of the first conveying unit 20 and is equipped with a coater 24 for supplying a paste P composed of the matrix resin composition. The paste P is coated on the surface of the first carrier sheet 3 in a predetermined thickness and a first resin sheet S1 is thus formed as the first carrier sheet 3 passes through the coater 24. The first resin sheet S1 travels as the first carrier sheet 3 is conveyed.

The fiber bundle supply unit 10 supplies a long fiber bundle f1 toward the cutting machine 13 via a plurality of guide rolls 18 while withdrawing the long fiber bundle f1 from a plurality of bobbins 17. The cutting machine 13 is positioned above the first carrier sheet 3 at a stage subsequent to the first coating unit 12 in the conveying direction. The cutting machine 13 continuously cuts the fiber bundle f1 supplied by the fiber bundle supply unit 10 into a predetermined length and is equipped with a guide roll 25, a pinch roll 26, and a cutter roll 27. The guide roll 25 guides the fiber bundle f1 supplied downward while rotating the fiber bundle f1. The pinch roll 26 rotates in a direction opposite to that of the guide roll 25 while sandwiching the fiber bundle f1 between itself and the guide roll 25. By this, the fiber bundle f1 is withdrawn from the plurality of bobbins 17. The cutter roll 27 cuts the fiber bundle f1 so as to have a predetermined length while rotating. A fiber bundle f2 cut into a predetermined length by the cutting machine 13 falls and is scattered on the first resin sheet S1 and a sheet-shaped fiber bundle group F is thus formed.

The second carrier sheet supply unit 14 supplies the long second carrier sheet 4 withdrawn from the second original fabric roll R2 to the second conveying unit 28. The second conveying unit 28 is positioned above the first carrier sheet 3 to be conveyed by the conveyor 23 and equipped with a plurality of guide rolls 29. The second conveying unit 28 conveys the second carrier sheet 4 supplied by the second carrier sheet supply unit 14 in a direction opposite to that of the first carrier sheet 3 (left side in the X axis direction) and then reverses the conveyance direction into the same direction as that of the first carrier sheet 3 by the plurality of guide rolls 29.

The second coating unit 15 is positioned right above the second carrier sheet 4 being conveyed in a direction opposite to that of the first carrier sheet 3 and equipped with a coater 30 for supplying the paste P composed of the matrix resin composition. The paste P is coated on the surface of the second carrier sheet 4 in a predetermined thickness and a second resin sheet S2 is formed as the second carrier sheet 4 passes through the coater 30. The second resin sheet S2 travels as the second carrier sheet 4 is conveyed.

The impregnating unit 16 is positioned at a stage subsequent to the cutting machine 13 in the first conveying unit 20 and equipped with a bonding mechanism 31 and a pressurizing mechanism 32. The bonding mechanism 31 is positioned above the pulley 21b of the conveyor 23 and equipped with a plurality of bonding rolls 33. The plurality of bonding rolls 33 are disposed side by side in the conveying direction in a state of being in contact with the back surface of the second carrier sheet 4 on which the second resin sheet S2 is formed. In addition, the plurality of bonding rolls 33 are disposed so that the second carrier sheet 4 gradually approaches the first carrier sheet 3.

In the bonding mechanism 31, the first carrier sheet 3 and the second carrier sheet 4 are conveyed while being superimposed on each other in a state of sandwiching the first resin sheet S1, the sheet-shaped fiber bundle group F, and the second resin sheet S2 therebetween. Here, one in which the first carrier sheet 3 and the second carrier sheet 4 are bonded to each other in a state of sandwiching the first resin sheet S1, the sheet-shaped fiber bundle group F, and the second resin sheet S2 therebetween is referred to as a laminate precursor S3.

The pressurizing mechanism 32 is positioned at a stage subsequent to the bonding mechanism 31 and equipped with a lower conveyor 36A in which an endless belt 35 is hung between a pair of pulleys 34a and 34b and an upper conveyor 36B in which an endless belt 35b is hung between a pair of pulleys 34c and 34d. The lower conveyor 36A and the upper conveyor 36B are disposed to face each other in a state in which the endless belts 35a and 35b are butted against each other.

In the pressurizing mechanism 32, the endless belt 35a is orbited as the pair of pulleys 34a and 34b of the lower conveyor 36A are rotated in the same direction. In addition, in the pressurizing mechanism 32, the endless belt 35b is orbited in a direction opposite to that of the endless belt 35a at the same speed as that of the endless belt 35a as the pair of pulleys 34c and 34d of the upper conveyor 36B are rotated in the same direction. By this, the laminate precursor S3 sandwiched between the endless belts 35a and 35b is conveyed to the right side in the X axis direction.

The pressurizing mechanism 32 is further provided with a plurality of lower rolls 37a and a plurality of upper rolls 37b. The plurality of lower rolls 37a are disposed side by side in the conveying direction in a state of being in contact with the back surface of the butted portion of the endless belt 35a. In the same manner, the plurality of upper rolls 37b are disposed side by side in the conveying direction in a state of being in contact with the back surface of the butted portion of the endless belt 35b. In addition, the plurality of lower rolls 37a and the plurality of upper rolls 37b are alternately disposed side by side along the conveying direction of the bonded sheet S3.

In the pressurizing mechanism 32, the laminate precursor S3 is pressurized by the plurality of lower rolls 37a and the plurality of upper rolls 37b while the bonded sheet S3 passes through between the endless belts 35a and 35b. At this time, the sheet-shaped fiber bundle group F is impregnated with the resin of the first resin sheet S1 and the resin of the second resin sheet S2 and a fiber-reinforced resin material (SMC) is thus formed.

The marking unit 38 forms a mark portion on the outer surface 4a of the second carrier sheet 4. The laminate 1 in which the fiber-reinforced resin material (SMC) is sandwiched between the first carrier sheet 3 and the second carrier sheet 4 and a mark portion is provided on the surface 4a of the second carrier sheet 4 is obtained as the mark portion is provide by the marking unit 38.

The marking unit 38 may be any marking unit as long as a mark portion can be provided at a predetermined position on the surface 4a of the second carrier sheet 4. Examples thereof may include a means equipped with a touch roll for sticking a tape with pressure sensitive adhesive to the surface of the carrier sheet and a means equipped with a coating unit for coating a UV curable resin ink on the surface of the carrier sheet and a UV irradiating unit for irradiating the ink coated with UV and curing the ink irradiated. In addition, it is also possible to use a blasting means for projecting fine sand onto the surface of the carrier sheet and thus forming a mark portion composed of concave and convex on the surface of the carrier sheet and a hairline means for bringing a roll having a surface provided with a concavoconvex shape into contact with the surface of the carrier sheet and thus forming a mark portion composed of concave and convex on the surface of the carrier sheet. These means may be used singly or two or more kinds thereof may be used concurrently.

The storage container 40 is a container for storing the laminate 1. The storage container 40 is not particularly limited and may be appropriately selected depending on the width, the length, and the like of the laminate 1 to be obtained.

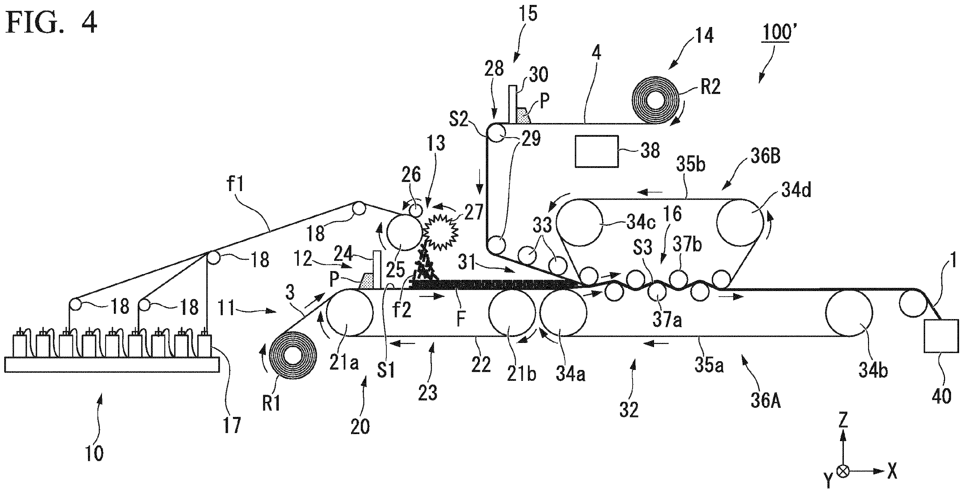

Fig. 4 illustrates a manufacturing apparatus 100' to be used in another example of the method for manufacturing a fiber-reinforced resin material laminate of the present invention.

### (Manufacturing Apparatus)

The manufacturing apparatus 100' is the same as the manufacturing apparatus 100 except that the marking unit 38 is moved to the front of the impregnating unit 16.

### (Manufacturing Method)

In the method for manufacturing a fiber-reinforced resin material laminate using the manufacturing apparatus 100, for example, the following scattering step, lamination step, impregnation step, and marking step are sequentially carried out.

Scattering step: a step of forming a sheet-shaped fiber bundle group F by continuously cutting the long fiber bundle f1 and scattering a plurality of cut fiber bundles f2 on the first resin sheet S1 formed on the first carrier sheet 3 in a sheet shape.

Lamination step: a step of forming the precursor laminate S3 by laminating the second resin sheet S2 and the second carrier sheet 4 on the sheet-shaped fiber bundle group F in this order.

Impregnation step: a step of forming a fiber-reinforced resin material by pressurizing the laminate precursor S3 from both sides and thus impregnating the sheet-shaped fiber bundle group F with the matrix resin composition.

Marking step: a step of obtaining the laminate 1 by providing a mark portion on the outer surface 4a of the second carrier sheet 4 by marking.

### <Scattering Step>

The first carrier sheet supply unit 11 withdraws the long first carrier sheet 3 from the first original fabric roll R1 and supplies it to the first conveying unit 20, and the paste P is coated on the long first carrier sheet 3 in a predetermined thickness by the first coating unit 12 to form a first resin sheet S1. The first resin sheet S1 on the first carrier sheet 3 is caused to travel by conveying the first carrier sheet 3 by the first conveying unit 20.

The fiber bundle f1 supplied by the fiber bundle supply unit 10 is continuously cut in the cutting machine 13 so as to have a predetermined length and the fiber bundle f2 cut is dropped onto the first resin sheet S1 and scattered. By this, the sheet-shaped fiber bundle group F in which the respective fiber bundles f2 are scattered on the traveling first resin sheet S1 in random fiber orientation is continuously formed.

### <Lamination Step>

The second carrier sheet supply unit 14 withdraws the long second carrier sheet 4 from the second original fabric roll R2 and supplies it to the second conveying unit 28. The paste P is coated on the surface of the second carrier sheet 4 in a predetermined thickness by the second coating unit 15 to form the second resin sheet S2.

The second resin sheet S2 is caused to travel by conveying the second carrier sheet 4, and the second resin sheet S2 is bonded and laminated on the sheet-shaped fiber bundle group F together with the second carrier sheet 4 by the bonding mechanism 31. By this, the precursor laminate S3 in which the material precursor in which the sheet-shaped fiber bundle group F is sandwiched between the first resin sheet S1 and the second resin sheet S2 is sandwiched between the first carrier sheet 3 and the second carrier sheet 4 is continuously formed.

### <Impregnation Step>

A fiber-reinforced resin material is formed between the first carrier sheet 3 and the second carrier sheet 4 by pressurizing the precursor laminate S3 from both sides and thus impregnating the sheet-shaped fiber bundle group F with the matrix resin composition of first resin sheet S1 and second resin sheet S2 by the pressurizing mechanism 32.

### <Marking Step>

In the marking unit 38, a mark portion is provided at a predetermined position on the outer surface 4a of the second carrier sheet 4 to obtain the laminate 1, and the laminate 1 is sequentially stored in the storage container 40 by, for example, being appropriately cut and transferred. For example, the mark portion is limitedly provided at a portion to be the terminal end portion of the laminate 1 to be stored in the storage container 40 on the surface 4a of the second carrier sheet 4 or the mark portion is continuously provided from the starting end (one end) to the terminal end (other end).

The method of providing the mark portion is not particularly limited, and examples thereof may include a method in which a tape with pressure sensitive adhesive is stuck on the surface of the sheet, a method in which a UV curable resin ink is coated on the surface of the sheet and then cured by being irradiated with UV, a method in which concave and convex are formed on the surface of the sheet by blasting, and a method in which concave and convex are formed on the surface of the sheet by hairline processing. Incidentally, the mark portion may be provided using an oil based ink in a case in which the matrix resin composition does not contain a volatile component such as styrene. In addition, the mark portion may be formed by laser in a case in which the fiber-reinforced resin material does not contain a component which causes inconveniences such as degeneration by laser.

When the marking step is carried out before the impregnation step, the carrier sheet meanders by pressurization and the like at the time of impregnation and the position of the mark portion provided on the carrier sheet and the position of the fiber-reinforced resin material which is expected to originally correspond to the position of the mark portion do not match to each other in some cases. When the mark portions do not match to each other in this manner, inconveniences are caused and the yield decreases as the fiber-reinforced resin material is displaced from the desired position, for example, in the case of performing positioning of the fiber-reinforced resin material laminate by utilizing the mark portion in the cutting and the like. For this reason, it is preferable to carry out the marking step after the impregnation step as in this example in the case of performing positioning of the fiber-reinforced resin material laminate by utilizing the mark portion.

Incidentally, the marking step may be carried out before the impregnation step in a case in which the mismatch of mark portions due to the meandering of the carrier sheet is not a significant problem, for example, a lot number is provided as the mark portion. For example, a fiber-reinforced resin material laminate may be manufactured by carrying out the respective steps other than the marking step using a carrier sheet provided with a mark portion by previously carrying out the marking step.

In addition, the position may be corrected so that the position of the mark portion matches to the position at which the sheet-shaped bundle group F is formed by scattering a plurality of fiber bundles f2 cut on the first resin sheet S1 formed on the first carrier sheet 3 in a sheet shape and the carrier sheet may be supplied in a case in which the marking step is carried out before the impregnation step or the mark portion is provided on the carrier sheet.

In the method for manufacturing a fiber-reinforced resin material laminate by using the manufacturing apparatus 100', for example, the following scattering step, marking step, lamination step, and the impregnation step are sequentially carried out.

Scattering step: a step of forming a sheet-shaped fiber bundle group F by continuously cutting the long fiber bundle f1 and scattering a plurality of fiber bundles f2 cut on the first resin sheet S1 formed on the first carrier sheet 3 in a sheet shape.

Marking step: a step of providing a mark portion on the outer surface 4a of the second carrier sheet 4 by marking.

Lamination step: a step of forming the precursor laminate S3 by laminating the second resin sheet S2 and the second carrier sheet 4 on the sheet-shaped fiber bundle group F in this order.

Impregnation step: a step of forming a fiber-reinforced resin material by pressurizing the laminate precursor S3 from both sides and thus impregnating the sheet-shaped fiber bundle group F with the matrix resin composition.

The scattering step, the marking step, the lamination step, and the impregnation step are the same as the steps described in the method for manufacturing a fiber-reinforced resin material laminate by using the manufacturing apparatus 100.

### (Effect)

In the method for manufacturing a fiber-reinforced resin material laminate of the present invention described above, a mark portion is provided on the surface of the carrier sheet in the marking step. For this reason, it is easy to handle the fiber-reinforced resin material laminate obtained before molding, for example, positioning is performed by utilizing the mark portion when performing cutting and the like and the fiber-reinforced resin material laminate is managed.

Incidentally, the method for manufacturing a fiber-reinforced resin material laminate of the present invention is not limited to the methods which have been described above and use the manufacturing apparatuses 100 and 100'. For example, the method may be a method in which a mark portion is provided on both of a pair of carrier sheets or a method in which a mark portion is provided only on the surface of the lower carrier sheet. The method may also be a method in which the fiber-reinforced resin material laminate manufactured is wound onto a bobbin.

In addition, the method may be a method in which a mark portion is provided on the surface of a carrier sheet by marking after the carrier sheet has been housed in a storage container or wound onto a bobbin.

In addition, the method may be a method in which a mark portion is provided before the carrier sheet wound onto an original fabric roll.

In addition, the mark portion may be provided on the inner surface of the carrier sheet when the carrier sheet is transparent and the inside thereof can be visually recognized in a case in which a fiber-reinforced resin material laminate is manufactured by carrying out steps other than the marking step using a carrier sheet provided with a mark portion previously through the marking step.

In the fiber-reinforced resin material laminate of the present invention, it is preferable that the fiber bundle is a carbon fiber bundle, the matrix resin composition is an epoxy acrylate resin, the carrier sheet is a polyethylene film or a polyester film, the mark portion is a tape with pressure sensitive adhesive, and the tape with pressure sensitive adhesive is one in which a silicone-based pressure sensitive adhesive is coated on a tape base material made of polyester.

Hereinafter, the present invention will be described in detail with reference to Examples, but the present invention is not limited by the following description.

### [Adhesive Property Test]

With regard to the mark portion of the fiber-reinforced resin material laminate obtained, the adhesive property of the mark portion was evaluated by visually confirming the presence or absence of peeling off of the mark portion after the fiber-reinforced resin material laminate was stored at room temperature (25°C) for 20 days.

### [Example 1]

A carbon fiber bundle (trade name "TR50S15L", manufactured by Mitsubishi Rayon Co., Ltd.) was used as a long fiber bundle. To 100 parts by mass of an epoxy acrylate resin (product name: NEOPOL 8051, manufactured by U-PICA Company, Ltd.), which was a thermosetting resin, 0.5 part by mass of a 75% solution of 1,1-di(t-butylperoxy)cyclohexane (product name: PERHEXA C-75, manufactured by NOF CORPORATION) and 0.5 part by mass of a 74% solution of t-butylperoxyisopropyl carbonate (product name: Kayacarbon BIC-75, manufactured by Kayaku Akzo Corporation) were added as a curing agent, 0.35 part by mass of a phosphoric acid ester-based derivative composition (product name: MOLD WIZ INT-EQ-6, manufactured by Axel Plastics Research Laboratories, Inc.) was added as an internal release agent, 15.5 parts by mass of a modified diphenylmethane diisocyanate (product name: COSMONATE LL, manufactured by Mitsui Chemicals, Inc.) was added as a thickening agent, and 0.02 part by mass of 1,4-benzoquinone (product name: p-benzoquinone, manufactured by Wako Pure Chemical Industries, Ltd.) was added as a stabilizer, and these were thoroughly mixed and stirred to obtain a matrix resin composition (paste).

A fiber-reinforced resin material laminate was manufactured by using the manufacturing apparatus 100 illustrated in Fig. 3. As the marking unit 38, a device equipped with a touch roll for sticking a tape with pressure sensitive adhesive to the surface 4a of the second carrier sheet 4 was used.

The paste (paste P) prepared above was coated on the first carrier sheet 3 (material: polyethylene film, thickness: 0.05 mm, manufactured by WAKO KASEI CO., LTD.) being conveyed to form a first resin sheet S1 having a thickness of 0.45 mm. In addition, a carbon fiber bundle (fiber bundle f1) having a thickness of 0.05 mm and a width of 7.5 mm was cut by using a cutting machine and dropped as a chopped fiber bundle (fiber bundle f2) having an average fiber length of 50.8 mm to form a sheet-shaped fiber bundle group F having a thickness of 1.3 mm. The paste P was coated on the second carrier sheet 4 (material: polyethylene film, thickness: 0.05 mm, manufactured by WAKO KASEI CO., LTD.) being conveyed in the direction opposite to that of the first carrier sheet 3 above the first carrier sheet 3 to form a second resin sheet S2 having a thickness of 0.45 mm and the second resin sheet S2 was bonded and laminated on the sheet-shaped fiber bundle group F by reversing the conveying direction. Furthermore, impregnation of the precursor laminate S3 sandwiched between the first carrier sheet 3 and the second carrier sheet 4 was performed by the material precursors of the first resin sheet S1, the sheet-shaped fiber bundle group F, and the second resin sheet S2, thereby obtaining a sheet-shaped laminate having a thickness of 2 mm. A tape with pressure sensitive adhesive, which obtained by coating a silicone-based pressure sensitive adhesive on a tape base material made of polyester and had a width of 10 mm and a thickness of 25 mm, was stuck to the center portion in the width direction on the surface 4a of the second carrier sheet 4 along the length direction to provide a mark portion, thereby obtaining a fiber-reinforced resin material laminate.

In the fiber-reinforced resin material laminate thus obtained, the mark portion did not peel off and exhibited sufficient adhesive property.

### INDUSTRIAL APPLICABILITY

By using the fiber-reinforced resin material laminate of the present invention, it is possible to easily carry out steps before molding such as cutting of a fiber-reinforced resin material.

According to the method for manufacturing a fiber-reinforced resin material laminate of the present invention, a fiber-reinforced resin material laminate which makes it possible to easily carry out steps before molding such as cutting of a fiber-reinforced resin material is obtained.

### EXPLANATIONS OF LETTERS OR NUMERALS

- 1: Fiber-reinforced resin material laminate
- 2: Fiber-reinforced resin material
- 3: First Carrier Sheet
- 4: Second Carrier Sheet
- 4a: Surface of second carrier sheet
- 5: Mark portion

## Claims

1. A fiber-reinforced resin material laminate comprising:
a fiber-reinforced resin material obtained by impregnating a fiber bundle group formed of a plurality of fiber bundles with a matrix resin composition; and
a pair of carrier sheets sandwiching the fiber-reinforced resin material, wherein
the carrier sheet is provided with a mark portion.

2. The fiber-reinforced resin material laminate according to claim 1, wherein the mark portion includes a tape with pressure sensitive adhesive, a cured film formed of a UV curable resin ink, or concave and convex.

3. The fiber-reinforced resin material laminate according to claim 2, wherein the pressure sensitive adhesive of the tape with pressure sensitive adhesive is a silicone-based pressure sensitive adhesive.

4. The fiber-reinforced resin material laminate according to claim 2, wherein the concave and convex are formed by at least one kind of means selected from the group consisting of a blasting means for projecting fine sand onto a surface of the carrier sheet and a hairline means for bringing a roll having a surface provided with a concavoconvex shape into contact with a surface of the carrier sheet.

5. The fiber-reinforced resin material laminate according to any one of claims 1 to 4, wherein the long fiber-reinforced resin material is sandwiched between the pair of long carrier sheets and the mark portion is provided at an end portion in a length direction of the carrier sheet.

6. The fiber-reinforced resin material laminate according to any one of claims 1 to 4, wherein the long fiber-reinforced resin material is sandwiched between the pair of long carrier sheets and the mark portion is provided from one end to the other end in a length direction of the carrier sheet.

7. A method for manufacturing the fiber-reinforced resin material laminate according to any one of claims 1 to 6, the method comprising:
an impregnation step of forming a fiber-reinforced resin material by pressurizing a laminate precursor disposed between the pair of carrier sheets from both sides using a material precursor having the fiber bundle group sandwiched between a pair of resin sheets formed of the matrix resin composition and thus impregnating the fiber bundle group with the matrix resin composition; and
a marking step of providing the mark portion on a surface of at least one of the pair of carrier sheets by marking.

8. The method for manufacturing the fiber-reinforced resin material laminate according to claim 7, wherein the marking step is carried out after the impregnation step.

9. The method for manufacturing the fiber-reinforced resin material laminate according to claim 7, wherein the marking step is carried out before the impregnation step.
